# EUROPÄISCHE PATENTSCHRIFT

(11) **EP 2 745 392 B1**
(45) Veröffentlichungstag und Bekanntmachung des Hinweises auf die Patenterteilung: **05.07.2017**
(21) Anmeldenummer: 12743717.6
(22) Anmeldetag: 01.08.2012
(51) Int. Cl.: H02P 6/14

(54) **VERFAHREN ZUR STEUERUNG EINES ELEKTRONISCH KOMMUTIERTEN MEHRPHASIGEN GLEICHSTROMMOTORS**
METHOD FOR CONTROLLING AN ELECTRONICALLY COMMUTATED POLYPHASE DC MOTOR
PROCÉDÉ DE COMMANDE D'UN MOTEUR POLYPHASÉ À COURANT CONTINU À COMMUTATION ÉLECTRONIQUE

(30) Priorität: 15.08.2011 DE 102011080941
(43) Veröffentlichungstag der Anmeldung: 25.06.2014
(73) Patentinhaber: Continental Teves AG&Co. Ohg, 60488 Frankfurt (DE)
(72) Erfinder: HEISE, Andreas, 64390 Erzhausen (DE); HARTMANN, Ralf, 65830 Kriftel (DE); MICHEL, Frank, 61191 Rosbach v.d.Höhe (DE); BITSCH, Christian, 64646 Heppenheim (DE); WARMBIER-LEIDIG, Burkhard, 64404 Bickenbach (DE); STAUDER, Peter, 55128 Mainz (DE); KAUFMANN, Tom, 55566 Ippenschied (DE); PACHUR, Andreas, 90403 Nürnberg (DE)
(86) Internationale Anmeldenummer: PCT/EP2012/065007
(87) Internationale Veröffentlichungsnummer: WO 2013/023915

(56) Entgegenhaltungen:
- GB-A- 2 347 283
- GB-A- 2 469 133
- US-A- 4 651 068
- US-A1- 2004 222 762
- US-A1- 2010 327 786

## Beschreibung

Die Erfindung betrifft ein Verfahren zur Steuerung eines elektronisch kommutierten mehrphasigen Gleichstrommotors (BLDC-Motor) mit Polzahl ≥ 2 und mit einem mehrsträngigen, insbesondere einem dreisträngigen Wicklungssystem, umfassend einen Rotor, einen Stator und einen die Lage des Rotors erfassenden Quadratur-Sensor gemäß Oberbegriff des Patentanspruchs 1. Ferner betrifft die Erfindung eine Vorrichtung zur Durchführung des erfindungsgemäßen Verfahrens gemäß Oberbegriff des Patentanspruchs 12.

Solche elektronisch kommutierten Gleichstrommotoren (BLDC-Motoren) sind allgemein bekannt und umfassen einen, bspw. als Permanentmagneten ausgeführten Rotor, der durch ein rotatorisch sich bewegendes Erregerfeld angetrieben wird. Dieses Erregerfeld wird von einem, bspw. dreiphasigen Wicklungssystem erzeugt, indem dessen Wicklungsstränge mit blockförmigen oder sinusförmigen Stromverläufen bestromt werden, die zueinander phasenversetzt sind.

Die Kommutierung eines BLDC-Motors wird standardmäßig auf der Basis einer mikroprozessor- bzw. softwarebasierte Steuer- bzw. Regelung der einzelnen Phasenströme der Wicklungen des Wicklungssystems des BLDC-Motors durchgeführt, indem in bekannter Weise bspw. eine dreifache Halbbrücke aus Leistungshalbleitern zur Erzeugung mehrerer in Phasenlage und Amplitude unterschiedlicher Ströme durch das Wicklungssystem benutzt wird. Die Leistungshalbleiter werden von einem Mikroprozessor angesteuert, der beispielsweise mittels eines Quadratur-Sensors die Phasenlage des Rotors abfragt und entsprechend dieser Phasenlage die Phasenströme durch das Wicklungssystem des BLDC-Motors steuert.

Es gibt unterschiedliche Kommutierungsformen, angefangen von einfacher Blockkommutierung über trapezbasierten bis zu sinus- und sinusbasierten Signalformen mit Übermodulation, die mit an sich bekannten Algorithmen und Verfahren realisiert werden können.

Der zur Steuerung des BLDC-Motors verwendete Mikroprozessor wird je nach verwendeten Kommutierungs- und Ansteuerverfahren unterschiedlich stark ausgelastet. Die Rechenkapazität hängt dabei von der Art der Anwendung ab, für die der BLDC-Motor verwendet wird. Ein Mikroprozessor hat wohl den Vorteil einer größtmöglichen Flexibilität, jedoch hat eine erhöhte Rechenkapazität, die vorgehalten werden muss, auch erhöhte Kosten zur Folge.

So ist aus der DE 10 2004 030 326 A1 eine die Bestromung des Wicklungssystems eines BLDC-Motors steuernde Bestromungseinrichtung bekannt, welche neben einem Mikroprozessor ein Blockkommutierungsmodul, ein Sinuskommutierungsmodul, ein Trapezkommutierungsmodul und ein Sinoid-Kommutierungsmodul jeweils in Form von Programmmodulen mit von dem Mikroprozessor ausführbaren Programmcode aufweist. Mittels einer Steuereinrichtung wird in Abhängigkeit von vor-gebbaren Kriterien eines dieser Kommutierungsmodule aktiviert oder neu beschrieben, so dass sich an die Wicklungen des BLDC-Motors über Vollbrückenschaltungen blockförmige, sinusförmige, trapezförmige, sinuidale Phasenströme oder freie Formen einstellen, wobei alle Wicklungen des Wicklungssystems des BLDC-Motors jeweils unabhängig voneinander ansteuerbar sind.

Dieses bekannte Steuerverfahren eines BLDC-Motors gemäß der DE 10 2004 030 326 A1 erfordert eine außerordentlich hohe Rechnerkapazität, da für die einzelnen Kommutierungsmodule ein Mikroprozessor erforderlich ist und zusätzlich zur Steuerung des BLDC-Motors eine Steuervorrichtung mit und Speichermittel sowie Programmcodes von Programmmodulen zur Realisierung der Steuerungsfunktionen aufweist.

Weiterhin ist aus der DE 40 41 792 A1 ein Verfahren zur Drehzahlsteuerung eines BLDC-Motors bekannt, bei welchem ein mit der Motorachse starr gekoppelter Inkrementalgeber Tachoimpulssignale erzeugt werden, von denen Adress-Signale für einen Festwertspeicher abgeleitet werden. In dem Festwertspeicher sind Datenwerte über den Amplitudenverlauf sinusförmiger Signalverläufe abgelegt, die nach einer D/A-Wandlung zur Bestromung der Motorwicklungen herangezogen werden. Andere Kommutierungsformen als diese sinusförmige Kommutierung können mit diesem bekannten Verfahren nicht durchgeführt werden.

Die US 2004/0222762 A1 beschreibt ein Verfahren zur adaptiven Steuerung eines Fahrzeugs, bei welchem eine Anpassung der Signalform der Kommutierung eines Elektromotors erfolgt, wenn eine Anpassung des Drehmoments des Elektromotors mittels Änderung des Voreilwinkels nicht mehr möglich ist.

Ein weiteres Steuersystem für eine elektrische Maschine geht aus der GB 2 469 133 A hervor, wobei Zeiten, zu denen Steuersignale von einer Antriebssteuereinheit erzeugt werden, durch einen festen Positionssensor-Offset korrigiert werden und eine Korrektur von Positionssensorsignalen mittels des Positionssensor-Offsets erfolgt, um Toleranzen bei der Ausrichtung eines Positionssensors relativ zu der Maschine zu kompensieren.

Eine weiterer artverwandter Schaltkreis zum Betreiben eines bürstenlosen Motors ist in der US 4 651 068 A beschrieben.

Die Aufgabe der Erfindung besteht darin, ein Verfahren der eingangs genannten Art anzugeben, welches einfach durchführbar ist und eine Ansteuerung des BLDC-Motors mit unterschiedlichen Kommutierungsformen erlaubt, ohne dass eine hohe Rechenkapazität eines Mikroprozessors vorgehalten werden muss. Ferner ist Aufgabe der Erfindung eine Vorrichtung zur Durchführung des erfindungsgemäßen Verfahrens anzugeben.

Die erstgenannte Aufgabe wird gelöst durch ein Verfahren mit den Merkmalen des Patentanspruchs 1.

Dieses Verfahren zur Steuerung eines elektronisch kommutierten mehrphasigen BLDC-Motors mit Polzahl ≥ 2 und mit einem mehrsträngigen, insbesondere einem dreisträngigen Wicklungssystem, umfassend einen Rotor, einen Stator und einen die Lage des Rotors erfassenden Quadratur-Sensor und eine Logikschaltung zur Erzeugung der Phasenspannungen des Wicklungssystems in Abhängigkeit der elektrischen Phasenlage des Rotors, zeichnet sich erfindungsgemäß dadurch aus, dass die Logikschaltung ein Speichermittel mit einer Nachschlagetabelle aufweist, in welcher zur Durchführung einer Kommutierung mit blockförmigen, trapezförmigen, sinusförmigen, sinoidbasierten oder mit zur Kommutierung geeigneten Signalformen die zugehörigen Ansteuerungswerte in Abhängigkeit der elektrischen Phasenlage des Rotors zur Erzeugung von Phasenspannungen für das Wicklungssystem abgelegt sind, eine Steuereinheit zur Erzeugung von Konfigurationsdaten für die Logikschaltung vorgesehen ist, wobei die Konfigurationsdaten wenigstens die Kommutierungsform bestimmen, und in Abhängigkeit der bestimmten Kommutierungsform die zugehörigen Ansteuerwerte in Abhängigkeit der mittels des Quadratur-Sensors bestimmten elektrischen Phasenlage des Rotors von dem Speichermittel einem PWM-Generator zur Erzeugung von PWM-Steuersignalen zugeführt werden, mit denen die Phasenströme in dem Wicklungssystem steuerbar sind.

Durch die Verwendung einer einfach aufgebauten Logikschaltung mit einem eine Nachschlagetabelle aufweisenden Speichermittel liegt der wesentlichste Vorteil dieses erfindungsgemäßen Verfahrens in der freien Wählbarkeit der Kommutierungsform, ohne dass zusätzliche Rechnerleistung zur Verfügung gestellt werden muss. Durch die freie Wählbarkeit der Kommutierungsform kann jede Art von BEMF(Back-Electromagnetic-Force)-förmigen Motoren angesteuert werden, so dass dadurch der Drehmomentrippel des anzusteuernden BLDC-Motors so klein wie möglich gehalten werden kann, insbesondere bis zu dessen vollständigen Eliminierung.

Bei einer Inbetriebnahme (startup) des BLDC-Motors muss lediglich mittels der Steuereinrichtung die Logikschaltung konfiguriert werden, das heißt, die von der Steuereinrichtung in Abhängigkeit der Anforderungen der jeweiligen Anwendung des BLDC-Motors erzeugten Konfigurationsdaten beinhalten neben der Kommutationsform z. Bsp. auch die Sensorauflösung des Quadratur-Sensors und die Motorpolpaarzahl des BLDC-Motors. Die Werte der Logikschaltung können auch auf Default-Werte stehen.

Neben der Verwendung einer einzigen Nachschlagetabelle für alle Kommutierungsformen ist es gemäß einer vorteilhaften Weiterbildung der Erfindung auch vorgesehen, dass für jede Kommutierungsform jeweils eine Untertabelle der Nachschlagetabelle vorgesehen ist. So kann auf die Ansteuerdaten einer ausgewählten Kommutierungsform schnell und einfach zugegriffen werden.

In einer Ausgestaltung der Erfindung sind die Ansteuerungswerte mit bis zu einer Schrittweite von 0,5° el in der Nachschlagetabelle abgelegt. Damit wird eine exakte Steuerung der Phasenströme durch das Wicklungssystem des BLDC-Motors möglich, insbesondere bestehen hinsichtlich der Erzeugung von kommutierungsfähigen Signalformen große Variationsmöglichkeiten.

Vorzugweise sind gemäß einer Weiterbildung der Erfindung die Ansteuerungswerte in der Nachschlagetabelle für eine Viertelperiode einer elektrischen Periode abgelegt. Damit kann der Speicherplatzbedarf gering gehalten werden, da bei spiegelsymmetrischen Signalformen durch die Spiegelung der abgelegten Ansteuerungswerte die vollständige elektrische Periode generiert werden kann.

In einer Ausgestaltung der Erfindung wird aus den Signalen des Lagepositionssensors die Drehzahl des Rotors ermittelt, aus der mittels motorspezifischen Koeffizienten ein dynamischer Voreilungswinkel bestimmt und mit dem die elektrische Phasenlage des Rotors korrigiert wird.

Damit ist es möglich, den feldschwächenden Strom im BLDC-Motor über den gesamten Drehzahlbereich auf den Wert Null zu halten. Auch ist es möglich bei kleinen Drehzahlwerten durch Änderung der motorspezifischen Koeffizienten den feldschwächenden Strom auf dem Wert Null zu halten, um damit ein hohes Drehmoment zu erzielen. Ferner können die motorspezifischen Koeffizienten so gewählt werden, dass bei hoher Drehzahl der BLDC-Motor in den feldschwächenden Betrieb gesteuert wird, so dass dadurch höhere Drehzahlen erreicht werden. Diese motorspezifischen Koeffizienten werden mit den von der Steuereinheit erzeugten Konfigurationsdaten für die Logikschaltung vorgegeben.

Weiterbildungsgemäß wird die mit dem dynamischen Voreilungswinkel korrigierte elektrische Phasenlage des Rotors des BLDC-Motors mit einem statischen Voreilungswinkel korrigiert und diese derart bestimmte Größe als aktuelle Ansteuerposition dem Speichermittel zugeführt. Dieser statische Voreilungswinkel wird system- oder anforderungsspezifisch bestimmt, um eine möglichst exakt bestimmte Phasenlage des Rotors zu erhalten. Da das erfindungsgemäße Verfahren nur eine Steuerung vorsieht, kann damit ein aufwendiger Stromregelalgorithmus entfallen.

Da bei einer sinusförmigen Ansteuerung des BLDC-Motors nicht die vollständig verfügbare Betriebsspannung ausgenutzt wird, ist es gemäß einer Ausgestaltung der Erfindung vorteilhaft, wenn bei einer Kommutierung mit sinusförmigen oder sinusbasierten Signalformen die mittels der Nachschlagetabelle bestimmten Ansteuerungswerte einer Übermodulation unterzogen werden. Dadurch wird die verfügbare Außenleiterspannung des BLDC-Motors erhöht.

Da bei einer schwankenden Versorgungsspannung des BLDC-Motors dessen Leistungsabgabe ebenso schwankt und für den BLDC-Motors keine Regelstruktur vorgesehen ist, ist gemäß einer Ausgestaltung der Erfindung vorgesehen, die Ansteuerungswerte einer Feedforward-Korrektur zu unterziehen, um diesen Auswirkungen einer schwankenden Versorgungsspannung entgegenzuwirken.

Eine weitere vorteilhafte Ausgestaltung der Erfindung sieht vor, dass zur Steuerung der Phasenströme des Wicklungssystems jeder Wicklung eine aus MOS-Feldeffekttransistoren gebildete Halbbrücke zugeordnet ist und in den Kommutierungszeitpunkten die Gate-Source-Spannungen der MOS-Feldeffekttransistoren überwacht werden und eine Umschaltung erst stattfindet, wenn die Gate-Source-Spannungen vorgegebene Schwellen erreicht bzw. unterschritten haben. Damit wird sichergestellt, dass bei einer Umschaltung der MOS-Feldeffekttransistoren in einer Halbbrücke durch deren unterschiedliche Schaltzeiten kein Kurzschluss entsteht, eine Totzeit zwischen den Umschaltzeitpunkten eingefügt wird.

Alternativ ist zur Verhinderung eines solchen Kurzschlusses in der Halbbrücke in einer Ausgestaltung der Erfindung vorgesehen, dass in den Kommutierungszeitpunkten erst nach Ablauf einer vorgegebenen Totzeit-Taktzahl des Systemtaktes eine Umschaltung stattfindet.

Schließlich können weiterbildungsgemäß die beiden vorgenannten Verfahren zur Verhinderung eines Kurzschlusses in den Halbbrücken bei einer Umschaltung kombiniert werden, indem in den Kommutierungszeitpunkten entweder erst nach Ablauf einer vorgegebenen Totzeit-Taktzahl des Systemtaktes eine Umschaltung stattfindet oder die Gate-Source-Spannungen der MOS-Feldeffekttransistoren überwacht werden und eine Umschaltung dann stattfindet, wenn die Gate-Source-Spannungen vorgegebene Schwellen erreicht bzw. unterschritten haben und die Schaltzeiten der MOS-Feld-effekttransistoren erhöht sind. Damit wird diese digitale Totzeitgenerierung durch zählen des Systemtaktes als minimale Totzeit verwendet und erst wenn äußere Umstände die Schaltzeiten der MOS-Feldeffekttransistoren erhöhen die Gate-Source-Spannungen überwacht, so dass die Umschaltung einer Halbbrücke erst freigegeben wird, wenn sich die MOS-Feldeffekttransistoren im sicheren Zustand für eine Umschaltung befinden.

Zur Erzeugung der einzelnen Phasenspannung für das Wicklungssystem des BLDC-Motors ist es gemäß einer Ausgestaltung der Erfindung vorgesehen, die mittels der Nachschlagetabelle bestimmte Ansteuerungswerte mit vorgegebenen Werten von Sollspannungen skaliert werden. Die entsprechenden Skalierungswerte sind Teil der Konfigurationsdaten, so dass damit eine einfache Einstellung auf die für den BLDC-Motor erforderlich Versorgungsspannung möglich ist.

Die zweitgenannte Aufgabe wird gelöst durch eine Vorrichtung mit den Merkmalen des Patentanspruchs 12.

Diese Vorrichtung zeichnet sich im Wesentlichen dadurch aus, dass die Logikschaltung ein Speichermittel mit einer Nachschlagetabelle aufweist, in welcher zur Durchführung einer Kommutierung mit blockförmigen, trapezförmigen, sinusförmigen, sinoidbasierten oder mit zur Kommutierung geeigneten Signalformen die zugehörigen Ansteuerungswerte in Abhängigkeit der elektrischen Phasenlage des Rotors zur Erzeugung von Phasenspannungen für das Wicklungssystem abgelegt sind, eine Steuereinheit zur Erzeugung von Konfigurationsdaten für die Logikschaltung vorgesehen ist, wobei die Konfigurationsdaten wenigstens die Kommutierungsform bestimmen, und in Abhängigkeit der bestimmten Kommutierungsform die zugehörigen Ansteuerwerte in Abhängigkeit der mittels des Quadratur-Sensors bestimmten elektrischen Phasenlage des Rotors von dem Speichermittel einem PWM-Generator zur Erzeugung von PWM-Steuersignalen zugeführt werden, mit denen die Phasenströme in dem Wicklungssystem steuerbar sind.

Mit einer solchen erfindungsgemäßen Logikschaltung lassen sich unterschiedliche Ansteuerungskonzepte mit beliebig auswählbarer Kommutierungsform mit geringem Aufwand an Hardware realisieren, insbesondere ohne zusätzliche Prozessorrechenleistung.

Vorteilhafte Weiterbildungen dieser erfindungsgemäßen Vorrichtung ergeben sich aus den abhängigen Patentansprüchen 14 bis 17.

Im Folgenden wird das erfindungsgemäße Verfahren unter Bezugnahme auf die beigefügten Figuren näher erläutert und beschrieben werden. Es zeigen:
- Figur 1: ein schematisches Blockschaltbild einer Logikschaltung zur Ansteuerung eines BLDC-Motors zur Durchführung des erfindungsgemäßen Verfahrens,
- Figur 2: einer Teildarstellung des Blockschaltbildes nach Figur 1 mit einer detaillierten Darstellung einer Leistungsendstufe und einem Wicklungssystem des BLDC-Motors,
- Figur 3: ein Diagramm, welches in Abhängigkeit des elektrischen Drehwinkels des Rotors die Ansteuerungswerte für eine 120°-Blockkommutierung zeigt, und
- Figur 4: ein Diagramm, welches in Abhängigkeit des elektrischen Drehwinkels des Rotors die Ansteuerungswerte für eine sinusförmige Kommutierung zeigt.

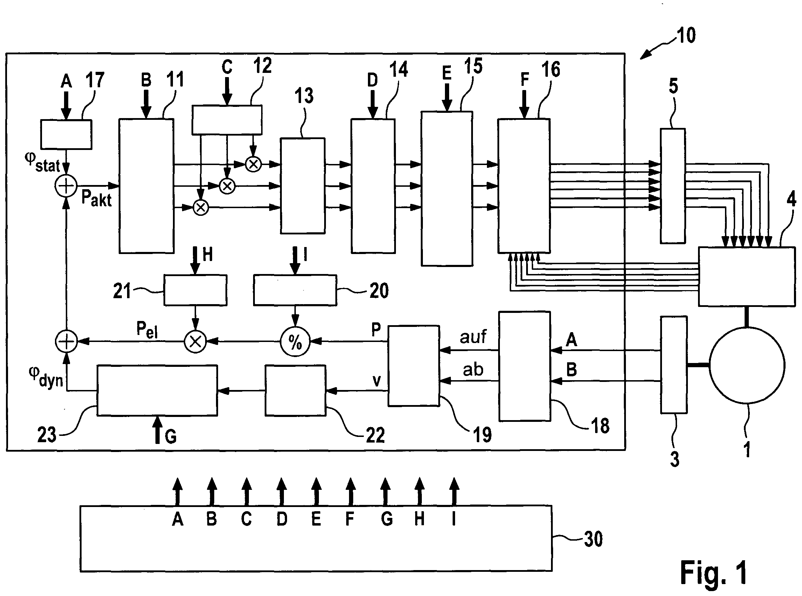

Gemäß Figur 1 wird ein bürstenloser Gleichstrommotor (BLDC-Motor) 1 von einer Leistungsendstufe 4 angetrieben, welche über eine Halbbrückentreiberschaltung 5 von einer Logikschaltung 10 angesteuert wird. Diese Logikschaltung 10 umfasst mehrere Funktionsblöcke 11 bis 23, von denen einige durch eine Steuereinheit 30 zur Inbetriebnahme des BLDC-Motors 1 konfiguriert werden.

Ferner weist der BLDC-Motor 1 einen Quadratur-Sensor als Lagesensor 3 auf, welcher in der Regel als Hall- oder MR(Magnetic Resonance)-Winkelsensorik zur Erfassung der Position des Rotors des BLDC-Motors 1 ausgebildet ist. Dieser Quadratur-Sensor 3 ist als Inkrementalgeber ausgebildet und erzeugt ein A- und ein B-Signal, die der Logikschaltung 10 zugeführt werden.

Bei einer Inbetriebnahme (startup) des BLDC-Motors 1 werden nach Figur 1 von der Steuereinheit 30 Konfigurationsdaten A bis I erzeugt die zur Konfiguration der Logikschaltung 10 einigen der Funktionsblöcken 11 bis 23 zugeführt werden, wie weiter unten im Detail ausgeführt werden wird. Die Konfiguration der Logikschaltung 10 kann auch zunächst mit Standardwerten erfolgen und anschließend über eine SPI-Kommunikationsschnittstelle mit der Steuereinheit 30 entsprechend der Applikation des BLDC-Motors 1 geändert werden.

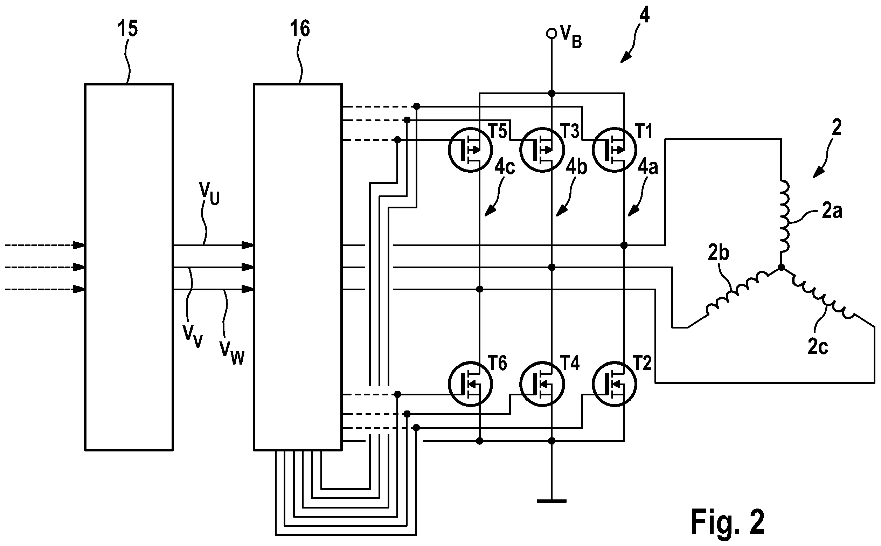

Figur 2 zeigt eine detaillierte Darstellung der Leistungsendstufe 4 und eines Wicklungssystems 2 des BLDC-Motors 1. Dieses Wicklungssystem 2 des BLDC-Motors 1 ist aus drei in Sternschaltung verschalteten Wicklungen 2a, 2b und 2c aufgebaut, deren freien Wicklungsenden jeweils mit einer Halbbrücke 4a, 4b und 4c verbunden sind. Jede dieser Halbbrücken 4a, 4b und 4c umfasst zwei P-Kanal MOS-Feldeffekttransistoren T1/T2, T3/T4 bzw. T5/T6 die jeweils als Highside-MOS-FET und Lowside-MOS-FET ausgebildet sind. Die Gate-Elektroden dieser MOS-Feldeffekttransistoren T1/T2, T3/T4 bzw. T5/T6 werden über die Halbbrückentreiberschaltung 5 (der Übersichtlichkeit halber nicht dargestellt) von einem Funktionsmodul 16 angesteuert, so dass die freien Enden der Wicklungen 2a, 2b und 2c mit der Betriebsspannung V_{B} oder mit Masse verbunden werden können.

Im Folgenden werden die Funktionsblöcke der Logikschaltung 10 ausgehend von den Signalen des Quadratur-Sensors 3 beschrieben.

In einem Quadratur-Decoder 18 werden die eine bestimmte Drehstellung des Rotors des BLDC-Motors 1 anzeigenden A- und B-Signale ausgewertet, indem bei entsprechenden Zuständen des Rotors ein Inkrement-Signal oder ein Dekrement-Signal an einen Positionszähler 19 weitergegeben wird. Dieser Positionszähler 19 gibt sowohl ein Positionssignal P als auch ein Drehzahlsignal v aus. Das Positionssignal P wird mittels eines Sensormoduls 20 an die vorhandene Sensorauflösung angepasst. Dieses Sensormodul 20 wird mittels Konfigurationsdaten I der Steuereinheit 30 konfiguriert. Da sich dieser gemessene Positionswert auf die mechanische Lage des Rotors des BLDC-Motors 1 bezieht, wird anschließend mittels eines Polpaarmoduls 21 auf die elektrische Lage Pₑₗ umgerechnet, das ebenfalls von der Steuereinheit 30 mit Konfigurationsdaten H konfiguriert wird, d. h. die richtige Polpaarzahl setzt.

Das Drehzahlsignal v wird als Motordrehzahl ermittelt und über einen Filterblock 22 an einen Funktionsmodul 23 zur Kompensation der dynamischen Phasenvoreilung des BLDC-Motors 1 weitergeleitet. Mittels dieses Funktionsmoduls 23 wird aus der Motordrehzahl v des BLDC-Motors 1 die motorspezifische Phasenvoreilung ermittelt, indem der Wert der Motordrehzahl v mit konfigurierten Koeffizienten (Konfigurationsdaten G der Steuereinheit 30) verrechnet wird. Diese Koeffizienten werden motorspezifisch ermittelt und in der Steuereinheit 30 abgelegt, so dass entsprechend des verwendeten BLDC-Motors 1 die Konfiguration des Funktionsmoduls 23 durchführbar ist.

Mit einer Kompensation der dynamischen Phasenvoreilung des BLDC-Motors 1 ist es möglich, dessen feldschwächenden Strom über den gesamten Drehzahlbereich auf den Wert Null zu halten. Ferner kann durch Änderung dieser Koeffizienten bei kleiner Motordrehzahl der feldschwächende Strom auf den Wert Null reduziert werden, um damit ein hohes Drehmoment sicherzustellen. Schließlich kann durch entsprechende Wahl dieser Koeffizienten der BLDC-Motor 1 bei hohen Drehzahlen in den feldschwächenden Bereich gesteuert werden, um höhere Drehzahlen zu erzielen.

Dieses Funktionsmodul 23 gibt einen dynamischen Voreilungswinkel (ϕ_{dyn} aus, der mit dem Wert Pₑₗ der elektrischen Lage des Rotors des BLDC-Motors 1 summiert und anschließend mit einem statischen Voreilungswinkel ϕₛₜₐₜ mittels eines Summiergliedes verrechnet wird, um die aktuelle Ansteuerposition Pₐₖₜ des BLDC-Motors 1 zu erhalten. Ein aufwendiger Stromregelalgorithmus ist daher nicht erforderlich.

Dieser statische Voreilungswinkel ϕₛₜₐₜ wird von einem Funktionsmodul 17 erzeugt, der mittels Konfigurationsdaten A der Steuereinheit 30 konfiguriert wird. Auch dieser statische Voreilungswinkel ϕₛₜₐₜ wird motorspezifisch bestimmt und entsprechend des eingesetzten BLDC-Motors 1 als Konfigurationsdaten A von der Steuereinheit 30 an diesen Funktionsmodul 17 ausgegeben.

Die aktuelle Ansteuerungsposition Pₐₖₜ stellt einen Eingangswert für einen beschreibaren Speicher 11 dar, der eine Nachschlagetabelle für Ansteuerungswerte des BLDC-Motors 1 enthält.

In dieser Nachschlagetabelle sind für jede Kommutierungsform eines eingesetzten BLDC-Motors 1 die zugehörigen Ansteuerungswerte in Abhängigkeit der aktuellen Ansteuerungsposition Pₐₖₜ abgelegt. So werden für eine blockförmige, trapezförmige, sinusförmige, sinoidbasierte oder für zur Kommutierung geeignete freie Signalformen die zugehörigen Ansteuerungswerte über Konfigurationsdaten B der Steuereinheit 30 verwendet, um den BLDC-Motor 1 mit dieser konfigurierten Kommutationsform zu steuern.

Damit ist es möglich jede Art von BEMF-förmigen Gleichstrommotoren mit jeder beliebigen Kommutierungsform anzusteuern.

Bei spiegelsymmetrischen Ansteuerungsformen werden die Ansteuerungswerte für eine Kommutierungsform in einer Viertelperiode abgelegt, so dass die vollständige Periode lediglich durch Spiegelung der Werte der abgelegten Viertelperiode generiert werden können.

Für jede Kommutierungsform wird eine Untertabelle der Nachschlagetabelle erstellt. Beispielhaft ist für eine 120°-Blockkommutierung eine Untertabelle mit Ansteuerungswerten nachfolgend dargestellt:

| **Schritte S** | **Phase** | **Phase V** | **Phase W** |
|---|---|---|---|
| 1 | 1 | 0 | Z |
| 2 | 1 | Z | 0 |
| 3 | Z | 1 | 0 |
| 4 | 0 | 1 | Z |
| 5 | 0 | Z | 1 |
| 6 | Z | 0 | 1 |

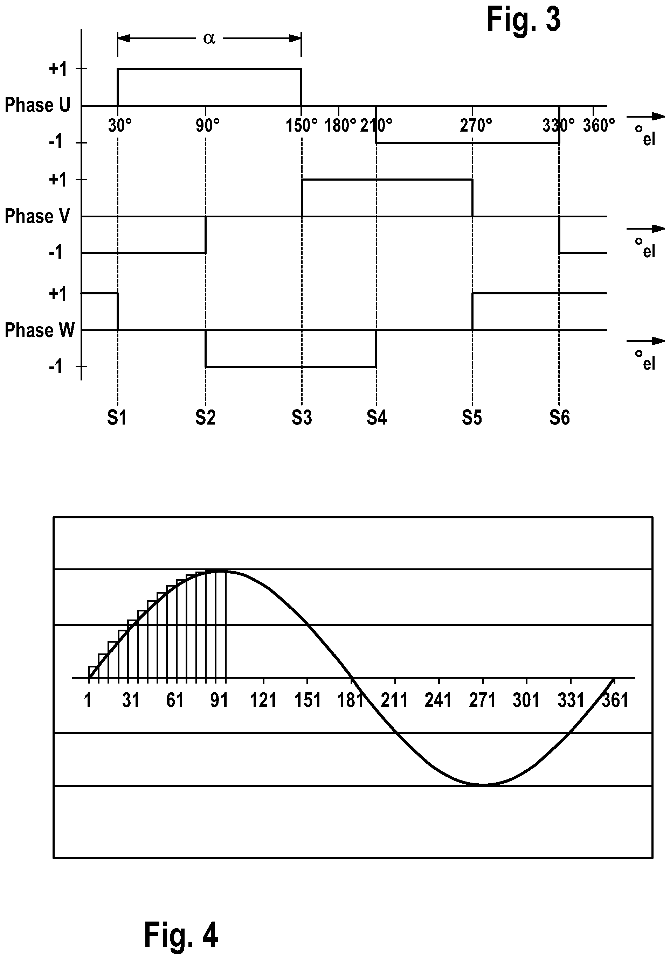

Figur 3 zeigt das zugehörige Steuermuster bzw. die zugehörige Signalform für die drei Phasen U, V und W zur Ansteuerung des dreiphasigen BLDC-Motors 1 nach Figur 2 für einen elektrischen Vollzyklus, also eine volle Drehung des Erregerfeldes um 360°. Dieser Vollzyklus ist in 60°-Zonen unterteilt, so dass in 6 Schritten 1 bis 6 diese 60°-Zonen durchlaufen werden. Zu Beginn einer jeden solchen 60°-Zone können die MOS-Feldeffekttransistoren T1/T2, T3/T4 bzw. T5/T6 der Leistungsendstufe 4 für die Kommutierung einer Phase an- oder ausgeschaltet werden. Der Zustand der Phase bleibt dann zumindest bis zum Ende einer solchen 60°-Zone erhalten, kann aber, wie nachfolgend erläutert wird, durch ein PWM-Signal überlagert werden. Der Kommutierungswinkel α beträgt 120°.

Die oben dargestellte Untertabelle definiert somit für jeden der Schritte S1 bis S6 die Ansteuerungswerte. Dabei haben die Einträge "1", "0" und "Z" die Bedeutung "Phase positiv", "Phase negativ" und "Phase hochohmig".

So wird bezugnehmend auf Figur 3 bspw. mit Schritt 1 die Phase U angesteuert, d. h. die Phase U wechselt ihren logischen Pegel von "0" auf "+1", die Phase V ist ausgeschaltet, liegt also auf einem logischen Pegel "-1" und die Phase W wird hochohmig, wechselt ihren Status von "+1" auf "0".

Ein weiteres Beispiel einer Untertabelle der Nachschlagetabelle zeigt die nachfolgende Tabelle, die Ansteuerungswerte für eine sinusförmige Kommutierung mit 5°-Schritten enthält:

| **Schritte/Grad** | **Phase U** | **Phase V** | **Phase W** |
|---|---|---|---|
| 5 | 0,09 | -0, 91 | 0, 82 |
| 10 | 0,17 | -0, 94 | 0,77 |
| 15 | 0,26 | -0, 97 | 0,71 |
| 20 | 0,34 | -0, 98 | 0, 64 |
| 25 | 0,42 | -1,00 | 0,57 |
| 30 | 0,50 | -1,00 | 0,50 |
| 35 | 0,57 | -1,00 | 0,42 |
| 40 | 0,64 | -0,98 | 0,34 |
| 45 | 0,71 | -0,97 | 0,26 |
| 50 | 0,77 | -0, 94 | 0,17 |
| ... | ... | ... | ... |
| 90 | 1 | -0,5 | -0,5 |

In der Untertabelle sind nur diese Werte für eine Viertelperiode abgelegt, da die Werte für die vollständige Periode durch Spiegelung erzeugt werden können. Die zugehörige Signalform bzw. das zugehörige Steuermuster für die erste Viertelperiode zeigt Figur 4 sowie die zugehörige Sinuskurve. Es kann auch eine feinere Granulierung als in 5°-Schritten, also bspw. bis zu einer Schrittweite von 0,5° gewählt werden.

In Abhängigkeit der ermittelten aktuellen Ansteuerungsposition Pₐₖₜ wird gemäß Figur 1 entsprechend der konfigurierten Kommutierungsform die Ansteuerungswerte von dem Speicher 11 aus der Nachschlagetabelle ausgegeben und mittels den in einem Skalierungsmodul 12 hinterlegten Skalierungsfaktoren multipliziert, um die einzelnen Phasenspannungen für die Wicklungen 2a, 2b und 2c des Wicklungssystems 2 zu erzeugen. Dieses Skalierungsmodul 12 wird ebenfalls mit von der Steuereinheit 30 erzeugten Kalibrierungsdaten C konfiguriert.

Bei einer sinusförmigen Ansteuerung des BLDC-Motors 1 wird nicht die vollständig verfügbare Betriebsspannung V_{B} ausgenutzt. Daher werden die erzeugten Phasenspannungen einem Übermodulationsmodul 13 zugeführt, wodurch den einzelnen sinusförmigen Phasenspannungen die 3. Harmonische Sinusschwingung aufaddiert wird. Damit wird die verfügbare Außenleiterspannung des BLDC-Motors 1 erhöht.

Bei einer schwankenden Betriebsspannung ist die Leistungsabgabe, also entweder das Drehmoment oder die Drehzahl des BLDC-Motors 1 ebenso schwankend, da die Ansteuerung des BLDC-Motors 1 nach Figur 1 keine Regelstruktur beinhaltet. Um diesem Effekt entgegenzuwirken, wird mittels eines Feed-Forward-Moduls 14 eine Anpassung der berechneten Phasenspannung an die Betriebsspannung V_{B}, also eine Feed-Forward-Korrektur durchgeführt.

Die derart erzeugten und korrigierten Phasenspannungen werden in einem PWM-Modul 15 in PWM-Steuersignale V_{U}, V_{V} und V_{W} mit einem entsprechenden Puls-Pausenverhältnis umgewandelt. Dieses PWM-Modul 15 kann auch Testvektoren auf die einzelnen Motorphasen geben, wobei diese Testvektoren über eine Kommunikationsschnittstelle E von bspw. der Steuereinheit 30 vorgegeben werden.

Bevor die PWM-Steuersignale V_{U}, V_{V} und V_{W} der Leistungsendstufe 4 zugeführt werden, wird mittels eines Kurzschlussschutzmoduls 16 eine Totzeitgenerierung durchgeführt.

Um zu verhindern, dass bei einer Umschaltung einer der Highside-MOSFETS T1, T3 oder T5 auf einen Lowside-MOSFETS T2, T4 oder T6 durch deren unterschiedliche Schaltzeiten ein Kurzschluss entsteht, wird eine Totzeit zwischen die Umschaltung eingefügt.

Mit diesem Kurzschlussschutzmodul 16 kann eines von drei Verfahren zur Totzeitgenerierung verwendet werden, wobei das entsprechende Verfahren mittels von der Steuereinheit 30 erzeugten Konfigurationsdaten F ausgewählt wird.

Das erste Verfahren zur Totzeitgenerierung verwendet den Systemtakt, indem bis zu einem vorgegebenen Zählwert gezählt wird.

Das zweite Verfahren ist in Figur 2 angedeutet, bei dem die einzelnen Gate-Source-Spannungen der MOS-Feldeffekttransistoren T1 bis T6 der Halbbrücken 4a, 4b und 4c gemessen und ausgewertet werden. Hierzu werden gemäß Figur 2 die Gate-Potenziale als auch die Source-Potentiale der MOS-Feldeffekttransistoren T1 bis T6 dem Kurzschlussschutzmodul 16 zugeführt. Wenn diese Gate-Source-Spannungen unter eine einstellbare Schwelle fallen, kann eine Umschaltung stattfinden, im anderen Fall, wenn diese Spannungen über diese Schwelle ansteigen, wird ein Umschalten verhindert.

Mit diesem Kurzschlussschutzmodul 16 werden unter Berücksichtigung der erzeugten Totzeit aus den von dem PWM-Modul 15 erzeugten drei PWM-Steuersignalen V_{U}, V_{V} und V_{W} sechs Ansteuer-Signale generiert, die die Steuersignale für die einzelnen MOS-Feldeffekttransistoren T1 bis T6 darstellen.

Das dritte Verfahren zur Totzeitgenerierung ist eine Kombination aus der digitalen Erzeugung der Totzeit mittels des Systemtaktes und dem Verfahren zur Überwachung der Gate-Source-Spannungen der MOS-Feldeffekttransistoren T1 bis T6 (Gate-Source-Spannungsverfahren).

Bei diesem dritten Verfahren wird die digital erzeugte Totzeit als minimale Totzeit verwendet und erst wenn durch äußere Umstände die Schaltzeiten der MOS-Feldeffekttransistoren T1 bis T6 erhöht sind und daher höhere Totzeiten benötigt werden, das Gate-Source-Spannungsverfahren eingesetzt und daher die Umschaltung einer Halbbrücke 4a, 4b oder 4c erst freigegeben wird, wenn die MOS-Feldeffekttransistoren T1 bis T6 sich in einem für die Umschaltung sicheren Zustand befinden.

Die Logikschaltung 10 gemäß Figur 1 lässt unterschiedliche Ansteuerungskonzepte zu, so kann bei einer sinusförmigen Kommutationsform die mit dem Übermodulationsmodul 13 durchzuführende Übermodulation zugeschaltet werden, auch die Auswertung der Gate-Source-Spannungen zur Erzeugung einer Totzeit ist optional.

Die Wicklungen 2a, 2b und 2c des Wicklungssystems 2 können auch in einer Dreieckschaltung verschaltet werden. Auch können die Halbbrücken 4a, 4b und 4c anstelle von P-Kanal mit N-Kanal Feldeffekttransistoren aufgebaut werden.

Anstelle der Untertabellen in dem oben dargestellten Ausführungsbeispiel können auch die Werte aller Kommutierungsformen in einer einzigen Nachschlagetabelle aufgeführt werden.

### Bezugszeichen:

- 1: BLDC-Motor
- 2: Wicklungssystem des BLDC-Motors 1
- 2a: Wicklung des Wicklungssystems 2
- 2b: Wicklung des Wicklungssystems 2
- 2c: Wicklung des Wicklungssystems 2
- 3: Lagesensor, Quadratur-Sensor
- 4: Leistungsendstufe mit drei Halbbrücken
- 4a: Halbbrücke
- 4b: Halbbrücke
- 4c: Halbbrücke
- 5: Halbrückentreiberschaltung

- 10: Logikschaltung
- 11: Speichermittel, Speicher
- 12: Skalierungsmodul
- 13: Übermodulationsmodul
- 14: Feed-Forward-Modul
- 15: PWM-Modul
- 16: Kurzschlussschutzmodul
- 17: Funktionsmodul für den statische Voreilungswinkel
- 18: Quadratur-Decoder
- 19: Positionszähler
- 20: Sensormodul
- 21: Polpaarmodul
- 22: Filterblock
- 23: Funktionsmodul 23 zur Kompensation der dynamischen Phasenvoreilung des BLDC-Motors 1

- 30: Steuereinheit

- A - I: Konfigurationsdaten
- T1 - T6: MOS-Feldeffekttransistoren
- P: Positionssignal, mechanisch Lage des Rotors
- Pₑₗ: elektrische Lage
- Pₐₖₜ: aktuelle Ansteuerposition des BLDC-Motors 1
- V_{B}: Betriebsspannung
- V: Drehzahlsignal
- V_{U}, V_{V}, V_{W}: PWM-Steuersignale

- α: Kommutierungswinkel
- ϕ_{dyn}: dynamischer Voreilungswinkel
- ϕₛₜₐₜ: statischer Voreilungswinkel

## Patentansprüche

1. Verfahren zur Steuerung eines elektronisch kommutierten mehrphasigen Gleichstrommotors (BLDC-Motor) (1) mit Polzahl ≥ 2 und mit einem mehrsträngigen, insbesondere einem dreisträngigen Wicklungssystem (2), umfassend einen Rotor, einen Stator und einen die Lage des Rotors erfassenden Quadratur-Sensor (3) und eine Logikschaltung (10) zur Erzeugung der Phasenspannungen des Wicklungssystems (2) in Abhängigkeit der elektrischen Phasenlage des Rotors, wobei
- die Logikschaltung (10) ein Speichermittel (11) mit einer Nachschlagetabelle aufweist, in welcher zur Durchführung einer Kommutierung mit blockförmigen, trapezförmigen, sinusförmigen, sinoidbasierten oder mit zur Kommutierung geeigneten Signalformen die zugehörigen Ansteuerungswerte in Abhängigkeit der elektrischen Phasenlage des Rotors zur Erzeugung von Phasenspannungen (V_{U}, V_{V}, V_{W}) für das Wicklungssystem (2) abgelegt sind,
- eine Steuereinheit (30) zur Erzeugung von Konfigurationsdaten für die Logikschaltung (10) vorgesehen ist, wobei die Konfigurationsdaten wenigstens die Kommutierungsform bestimmen,
- in Abhängigkeit der bestimmten Kommutierungsform die zugehörigen Ansteuerwerte in Abhängigkeit der mittels des Quadratur-Sensors (3) bestimmten elektrischen Phasenlage des Rotors von dem Speichermittel (11) einem PWM-Generator (15) zur Erzeugung von PWM-Steuersignalen (V_{U}, V_{V}, V_{W}) zugeführt werden, mit denen die Phasenströme in dem Wicklungssystem (2) steuerbar sind, **dadurch gekennzeichnet, dass**
- zur Steuerung der Phasenströme des Wicklungssystems (2) jeder Wicklung eine aus MOS-Feldeffekttransistoren gebildete Halbbrücke (4) zugeordnet ist und
- in den Kommutierungszeitpunkten die Gate-Source-Spannungen der MOS-Feldeffekttransistoren überwacht werden und eine Umschaltung erst stattfindet, wenn die Gate-Source-Spannungen vorgegebene Schwellen erreicht bzw. unterschritten haben und die Schaltzeiten der MOS-Feldeffekttransistoren erhöht sind.

2. Verfahren nach Anspruch 1, **dadurch gekennzeichnet, dass** für jede Kommutierungsform jeweils eine Untertabelle der Nachschlagetabelle vorgesehen ist.

3. Verfahren nach Anspruch 1 oder 2, **dadurch gekennzeichnet, dass** die Ansteuerungswerte mit bis zu einer Schrittweite von 0,5° el in der Nachschlagetabelle abgelegt sind.

4. Verfahren nach einem der Ansprüche 1 bis 3, **dadurch gekennzeichnet, dass** die Ansteuerungswerte für eine Viertelperiode einer elektrischen Periode in der Nachschlagetabelle abgelegt sind.

5. Verfahren nach einem der Ansprüche 1 bis 4, **dadurch gekennzeichnet, dass** - aus den Signalen des Quadratur-Sensors (3) die Drehzahl des Rotors bestimmt wird, und
- aus der Drehzahl des Rotors mittels motorspezifischen Koeffizienten ein dynamischer Voreilungswinkel bestimmt wird, mit dem die mit dem Quadratur-Sensor (3) ermittelte elektrische Phasenlage des Rotors korrigierbar ist.

6. Verfahren nach Anspruch 5, **dadurch gekennzeichnet, dass** der mit dem dynamischen Voreilungswinkel korrigierte Wert der ermittelten Phasenlage des Rotors mit einem statischen Voreilungswinkel korrigiert und diese Größe als aktuelle Ansteuerposition dem Speichermittel (11) zugeführt wird.

7. Verfahren nach einem der vorhergehenden Ansprüche, **dadurch gekennzeichnet, dass** bei einer Kommutierung mit sinusförmigen oder sinusbasierten Signalformen die mittels der Nachschlagetabelle bestimmte Ansteuerungswerte einer Übermodulation unterzogen werden.

8. Verfahren nach einem der vorhergehenden Ansprüche, **dadurch gekennzeichnet, dass** die Ansteuerungswerte einer Feedforward-Korrektur unterzogen werden, um einer schwankenden Versorgungsspannung des BLDC-Motors (1) entgegenzuwirken.

9. Verfahren nach einem der vorhergehenden Ansprüche, **dadurch gekennzeichnet, dass**
- zur Steuerung der Phasenströme des Wicklungssystems (2) jeder Wicklung eine aus MOS-Feldeffekttransistoren gebildete Halbbrücke (4) zugeordnet ist, und
- in den Kommutierungszeitpunkten die Gate-Source-Spannungen der MOS-Feldeffekttransistoren überwacht werden und eine Umschaltung erst stattfindet, wenn die Gate-Source-Spannungen vorgegebene Schwellen erreicht bzw. unterschritten haben.

10. Verfahren nach einem der Ansprüche 1 bis 9, **dadurch gekennzeichnet, dass**
- zur Steuerung der Phasenströme des Wicklungssystems (2) jeder Wicklung eine aus MOS-Feldeffekttransistoren gebildete Halbbrücke (4) zugeordnet ist, und
- in den Kommutierungszeitpunkten erst nach Ablauf einer vorgegebenen Totzeit-Taktzahl des Systemtaktes eine Umschaltung stattfindet.

11. Verfahren nach einem der vorhergehenden Ansprüche, **dadurch gekennzeichnet, dass** zur Erzeugung der Phasenspannungen für das Wicklungssystem die mittels der Nachschlagetabelle bestimmte Ansteuerungswerte mit vorgegebenen Werten von Sollspannungen skaliert werden.

12. Vorrichtung zur Steuerung eines elektronisch kommutierten mehrphasigen Gleichstrommotors (BLDC-Motor) (1) mit Polzahl ≥ 2 und mit einem mehrsträngigen, insbesondere einem dreisträngigen Wicklungssystem (2), umfassend einen Rotor, einen Stator und einen die Lage des Rotors erfassenden Quadratur-Sensor (3) und eine Logikschaltung (10) zur Erzeugung der Phasenspannungen des Wicklungssystems (2) in Abhängigkeit der elektrischen Phasenlage des Rotors, wobei
- die Logikschaltung (10) ein Speichermittel (11) mit einer Nachschlagetabelle aufweist, in welcher zur Durchführung einer Kommutierung mit blockförmigen, trapezförmigen, sinusförmigen, sinoidbasierten oder mit zur Kommutierung geeigneten Signalformen die zugehörigen Ansteuerungswerte in Abhängigkeit der elektrischen Phasenlage des Rotors zur Erzeugung von Phasenspannungen (V_{U}, V_{V}, V_{W}) für das Wicklungssystem (2) abgelegt sind,
- eine Steuereinheit (30) zur Erzeugung von Konfigurationsdaten für die Logikschaltung (10) vorgesehen ist, wobei die Konfigurationsdaten wenigstens die Kommutierungsform bestimmen,
- in Abhängigkeit der bestimmten Kommutierungsform die zugehörigen Ansteuerwerte in Abhängigkeit der mittels des Quadratur-Sensors (3) bestimmten elektrischen Phasenlage des Rotors von dem Speichermittel (11) einem PWM-Generator (15) zur Erzeugung von PWM-Steuersignalen (V_{U}, V_{V}, V_{W}) zugeführt werden, mit denen die Phasenströme in dem Wicklungssystem (2)steuerbar sind, **dadurch gekennzeichnet, dass**
- zur Steuerung der Phasenströme des Wicklungssystems (2) jeder Wicklung eine aus MOS-Feldeffekttransistoren gebildete Halbbrücke (4) zugeordnet ist und
- in den Kommutierungszeitpunkten die Gate-Source-Spannungen der MOS-Feldeffekttransistoren überwacht werden und eine Umschaltung erst stattfindet, wenn die Gate-Source-Spannungen vorgegebene Schwellen erreicht bzw. unterschritten haben und die Schaltzeiten der MOS-Feldeffekttransistoren erhöht sind.

13. Vorrichtung nach Anspruch 12, **dadurch gekennzeichnet, dass** ein Quadratur-Decoder (18) und ein Positionszähler (19) vorgesehen sind, mit welchen ein Drehzahlsignal (v) und ein Positionssignal (P) erzeugt werden.

14. Vorrichtung nach Anspruch 13, **dadurch gekennzeichnet, dass** ein Funktionsmodul (23) zur Kompensation der dynamischen Phasenvoreilung des BLDC-Motors (1) vorgesehen ist, welchem das Drehzahlsignal (v) zugeführt wird.

15. Vorrichtung nach einem der Ansprüche 12 bis 14, **dadurch gekennzeichnet, dass** ein Übermodulationsmodul (13) vorgesehen ist.

16. Vorrichtung nach einem der Ansprüche 12 bis 15, **dadurch gekennzeichnet, dass** ein Kurzschlussschutzmodul (16) zur Totzeitgenerierung vorgesehen ist.

17. Vorrichtung nach einem der Ansprüche 12 bis 16, **dadurch gekennzeichnet, dass** ein Feed-Forward-Modul (14) zur Durchführung einer Feedforward-Korrektur vorgesehen ist.

## Claims

1. Method for controlling an electronically commutated polyphase DC motor (BLDC motor) (1) with a pole number ≥ 2 and with a winding system (2) with a plurality of winding phases, in particular three winding phases, comprising a rotor, a stator and a quadrature sensor (3) detecting the angle of the rotor and a logic circuit (10) for generating the phase voltages of the winding system (2) depending on the electrical phase angle of the rotor, wherein
- the logic circuit (10) has a storage means (11) having a lookup table, in which, in order to implement commutation with block-shaped, trapezoidal, sinusoidal, sinoid-based signal waveforms or with signal waveforms which are suitable for commutation, the associated drive values are stored depending on the electrical phase angle of the rotor for generating phase voltages (V_{U}, V_{V}, V_{W}) for the winding system (2),
- a control unit (30) for generating configuration data for the logic circuit (10) is provided, wherein the configuration data determine at least the commutation form,
- depending on the specific commutation form, the associated drive values are supplied from the storage means (11) to a PWM generator (15) for generating PWM control signals (V_{U}, V_{V}, V_{W}) depending on the electrical phase angle of the rotor determined by means of the quadrature sensor (3), which PWM control signals can be used to control the phase currents in the winding system (2), **characterized in that**
- a half-bridge (4) formed from MOS field-effect transistors is assigned to each winding for controlling the phase currents of the winding system (2) and
- at the commutation times, the gate-source voltages of the MOS field-effect transistors are monitored and switchover only takes place when the gate-source voltages have reached or fallen below predetermined thresholds and the switching times of the MOS field-effect transistors have increased.

2. Method according to Claim 1, **characterized in that** in each case one subtable of the lookup table is provided for each commutation form.

3. Method according to Claim 1 or 2, **characterized in that** the drive values are stored in the lookup table with up to an increment of 0.5° el.

4. Method according to one of Claims 1 to 3, **characterized in that** the drive values are stored in the lookup table for a quarter-period of an electrical period.

5. Method according to one of Claims 1 to 4, **characterized in that**
- the speed of the rotor is determined from the signals of the quadrature sensor (3), and
- a dynamic lead angle with which the electrical phase angle of the rotor determined by the quadrature sensor (3) can be corrected is determined from the speed of the rotor by means of motor-specific coefficients.

6. Method according to Claim 5, **characterized in that** the value of the determined phase angle of the rotor, corrected by the dynamic lead angle, is corrected by a steady-state lead angle, and this variable is supplied to the storage means (11) as the present drive position.

7. Method according to one of the preceding claims, **characterized in that**, in the case of commutation with sinusoidal or sine-based signal waveforms, the drive values determined by means of the lookup table are subjected to overmodulation.

8. Method according to one of the preceding claims, **characterized in that** the drive values are subjected to feedforward correction in order to counteract a fluctuating supply voltage of the BLDC motor (1).

9. Method according to one of the preceding claims, **characterized in that**
- a half-bridge (4) formed from MOS field-effect transistors is assigned to each winding for controlling the phase currents of the winding system (2), and
- at the commutation times, the gate-source voltages of the MOS field-effect transistors are monitored and switchover takes place only when the gate-source voltages have reached or fallen below predetermined thresholds.

10. Method according to one of Claims 1 to 9, **characterized in that**
- a half-bridge (4) formed from MOS field-effect transistors is assigned to each winding for controlling the phase currents of the winding system (2), and
- at the commutation times, switchover takes place only after execution of a predetermined dead time clock number of the system clock.

11. Method according to one of the preceding claims, **characterized in that** the drive values determined by means of the lookup table are scaled with predetermined values for setpoint voltages in order to generate the phase voltages for the winding system.

12. Apparatus for controlling an electronically commutated polyphase DC motor (BLDC motor) (1) with a pole number ≥ 2 and with a winding system (2) with a plurality of winding phases, in particular three winding phases, comprising a rotor, a stator and a quadrature sensor (3) detecting the angle of the rotor and a logic circuit (10) for generating the phase voltages of the winding system (2) depending on the electrical phase angle of the rotor, wherein
- the logic circuit (10) has a storage means (11) having a lookup table, in which, in order to implement commutation with block-shaped, trapezoidal, sinusoidal, sinoid-based signal waveforms or with signal waveforms which are suitable for commutation, the associated drive values are stored depending on the electrical phase angle of the rotor for generating phase voltages (V_{U}, V_{V}, V_{W}) for the winding system (2),
- a control unit (30) for generating configuration data for the logic circuit (10) is provided, wherein the configuration data determine at least the commutation form,
- depending on the specific commutation form, the associated drive values are supplied from the storage means (11) to a PWM generator (15) for generating PWM control signals (V_{U}, V_{V}, V_{W}) depending on the electrical phase angle of the rotor determined by means of the quadrature sensor (3), which PWM control signals can be used to control the phase currents in the winding system (2), **characterized in that**
- a half-bridge (4) formed from MOS field-effect transistors is assigned to each winding for controlling the phase currents of the winding system (2) and
- at the commutation times, the gate-source voltages of the MOS field-effect transistors are monitored and switchover only takes place when the gate-source voltages have reached or fallen below predetermined thresholds and the switching times of the MOS field-effect transistors have increased.

13. Apparatus according to Claim 12, **characterized in that** a quadrature decoder (18) and a position counter (19) are provided, with which a speed signal (v) and a position signal (P) are generated.

14. Apparatus according to Claim 13, **characterized in that** a function module (23) for compensating for the dynamic phase lead of the BLDC motor (1) is provided, to which the speed signal (v) is supplied.

15. Apparatus according to one of Claims 12 to 14, **characterized in that** an overmodulation module (13) is provided.

16. Apparatus according to one of Claims 12 to 15, **characterized in that** a short-circuit protection module (16) for dead time generation is provided.

17. Apparatus according to one of Claims 12 to 16, **characterized in that** a feedforward module (14) for implementing a feedforward correction is provided.

## Revendications

1. Procédé de commande d'un moteur polyphasé à courant continu à commutation électronique (moteur BLDC) (1) présentant un nombre de pôles ≥ 2 et un système d'enroulements (2) polyphasé, en particulier triphasé, comprenant un rotor, un stator et un capteur en quadrature (3) détectant la position du rotor et un circuit logique (10) destiné à générer les tensions de phase du système d'enroulements (2) en fonction de la position de phase électrique eu rotor, dans lequel
- le circuit logique (10) comporte un moyen de stockage (11) pourvu d'une table de consultation dans laquelle sont stockées, pour réaliser une commutation avec des formes de signaux prismatiques, trapézoïdales, sinusoïdales, à base de sinusoïdes, ou adaptées à la commutation, les valeurs de commande correspondantes en fonction de la position de phase électrique du rotor pour générer des tensions de phase (V_{U}, V_{V}, V_{W}) pour le système d'enroulements (2),
- il est prévu une unité de commande (30) destinée à générer des données de configuration pour le circuit logique (10), dans lequel les données de configuration déterminent au moins la forme de commutation,
- en fonction de la forme de commutation déterminée, les valeurs de commande correspondantes sont délivrées par le moyen de stockage (11) à un générateur PWM (15) destiné à générer des signaux de commande PWM (V_{U}, V_{V}, V_{W}) en fonction de la position de phase électrique du rotor, déterminée au moyen du capteur en quadrature (3), signaux de commande avec lesquels les courants de phase peuvent être commandés dans le système d'enroulements (2), **caractérisé en ce que**
- pour commander les courants de phase du système d'enroulements (2), un demi-pont (4) formé à partir de transistors à effet de champ MOS est associé à chaque enroulement, et
- aux instants de commutation, les tensions grille-source des transistors à effet de champ MOS sont surveillées et un basculement ne se produit que lorsque les tensions grille-source atteignent des seuils prédéterminés ou s'abaissent en dessous de ceux-ci et les temps de commutation des transistors à effet de champ MOS sont augmentés.

2. Procédé selon la revendication 1, **caractérisé en ce que**, pour chaque forme de commutation, il est respectivement prévu une sous-table de la table de consultation.

3. Procédé selon la revendication 1 ou 2, **caractérisé en ce que** les valeurs de commande sont stockées dans la table de consultation jusqu'à une largeur de pas de 0,5° él.

4. Procédé selon l'une quelconque des revendication 1 à 3, **caractérisé en ce que** les valeurs de commande sont stockées dans la table de consultation pendant un quart de période d'une période électrique.

5. Procédé selon l'une quelconque des revendication 1 à 4, **caractérisé en ce que**
- la vitesse de rotation du rotor est déterminée à partir des signaux du capteur en quadrature (3), et
- à partir de la vitesse de rotation du rotor, au moyen de coefficients spécifiques du moteur on détermine angle d'avance dynamique avec lequel la position de phase électrique du rotor déterminée par le capteur en quadrature (3) peut être corrigée.

6. Procédé selon la revendication 5, **caractérisé en ce que** la valeur corrigée avec l'angle d'avance dynamique de la position de phase déterminée du rotor est corrigée avec un angle d'avance statique et **en ce que** cette grandeur est délivrée en tant que position de commande courante au moyen de stockage (11).

7. Procédé selon l'une quelconque des revendications précédentes, **caractérisé en ce que**, lors d'une commutation ayant des formes de signal sinusoïdales ou à base de sinus, les valeurs de commande, déterminées au moyen de la table de consultation sont soumises à une surmodulation.

8. Procédé selon l'une quelconque des revendications précédentes, **caractérisé en ce que** les valeurs de commande sont soumises à une correction en boucle ouverte afin d'éviter une fluctuation de la tension d'alimentation du moteur BLDC (1).

9. Procédé selon l'une quelconque des revendications précédentes, **caractérisé en ce que**,
- pour commander les courants de phase du système d'enroulements (2), un demi-pont (4) formé par des transistors à effet de champ MOS est associé à chaque enroulement, et
- aux instants de commutation, les tensions grille-source des transistors à effet de champ MOS sont surveillées et un basculement n'est effectué que lorsque les tensions grille-source ont atteint des seuils prédéterminée ou se sont abaissés en dessous de ceux-ci.

10. Procédé selon l'une quelconque des revendications 1 à 9, **caractérisé en ce que**
- pour commander les courants de phase du système d'enroulements (2), un demi-pont (4) formé par des transistors à effet de champ MOS est associé à chaque enroulement, et
- aux instants de commutation, un basculement ne se produit qu'après l'écoulement d'un nombre prédéterminé d'impulsions d'horloge de temps mort de l'horloge système.

11. Procédé selon l'une quelconque des revendications précédentes, **caractérisé en ce que**, pour générer les tensions de phase pour le système d'enroulements, les valeurs de commande déterminées au moyen de la table de consultation sont soumises à une modification d'échelle avec des valeurs prédéterminées de tensions nominales.

12. Dispositif de commande d'un moteur polyphasé à courant continu à commutation électronique (moteur BLDC) (1) présentant un nombre de pôles ≥ 2 et comportant un système d'enroulements (2) polyphasé, en particulier triphasé, comprenant un rotor, un stator et un capteur en quadrature (3) détectant la position du rotor et un circuit logique (10) destiné à générer les tensions de phase du système d'enroulements (2) en fonction de la position de phase électrique du rotor, dans lequel
- le circuit logique (10) comporte un moyen de stockage (11) comportant une table de consultation dans laquelle sont stockées, pour réaliser une commutation avec des formes de signaux prismatiques, trapézoïdales, sinusoïdales, à base de sinusoïdes, ou adaptées à la commutation, les valeurs de commande correspondantes en fonction de la position de phase électrique du rotor pour générer des tensions de phase (V_{U}, V_{V}, V_{W}) pour le système d'enroulements (2),
- il est prévu une unité de commande (30) destinée à générer des données de configuration pour le circuit logique (10), dans lequel les données de configuration déterminent au moins la forme de commutation,
- en fonction de la forme de commutation déterminée, les valeurs de commande correspondantes sont délivrées par le moyen de stockage (11) à un générateur PWM (15) destiné à générer des signaux de commande PWM (V_{U},V_{V}, V_{W}) en fonction de la position de phase électrique du rotor, déterminée au moyen du capteur en quadrature (3), signaux de commande avec lesquels les courants de phase peuvent être commandés dans le système d'enroulements (2), **caractérisé en ce que**
- pour commander les courants de phase du système d'enroulements (2), un demi-pont (4) formé par des transistors à effet de champ MOS est associé à chaque enroulement, et
- aux instants de commutation, les tensions grille-source des transistors à effet de champ MOS sont surveillées et un basculement ne se produit que lorsque les tensions grille-source atteignent des seuils prédéterminés ou s'abaissent en dessous de ceux-ci et les temps de commutation des transistors à effet de champ MOS sont augmentés.

13. Dispositif selon la revendication 12, **caractérisé en ce qu'**il est prévu un décodeur en quadrature (18) et un compteur de position (19) au moyen desquels un signal de vitesse de rotation (v) et un signal de position (P) sont générés.

14. Dispositif selon la revendication 13, **caractérisé en ce qu'**il est prévu un module fonctionnel (23) destiné à compenser l'avance de phase dynamique du moteur BLDC (1), auquel est délivré le signal de vitesse de rotation (v).

15. Dispositif selon l'une quelconque des revendications 12 à 14, **caractérisé en ce qu'**il est prévu un module de surmodulation (13).

16. Dispositif selon l'une quelconque des revendications 12 à 15, **caractérisé en ce qu'**il est prévu un module de protection contre les courts-circuits (16) destiné à générer des temps morts.

17. Dispositif selon l'une quelconque des revendications 12 à 16, **caractérisé en ce qu'**il est prévu un module de boucle ouverte (14) destiné à effectuer une correction en boucle ouverte.
